# EUROPÄISCHE PATENTANMELDUNG

(11) **EP 1 627 802 A2**
(43) Veröffentlichungstag der Anmeldung: **22.02.2006**
(21) Anmeldenummer: 05012107.8
(22) Anmeldetag: 06.06.2005
(51) Int. Cl.: B62D 35/00, B60Q 1/26

(54) **Dachaufbau für ein Fahrzeug**

(30) Priorität: 19.08.2004 DE 102004040705; 01.09.2004 DE 102004042696
(71) Anmelder: IAV GMBH INGENIEURGESELLSCHAFT AUTO UND VERKEHR, 10587 Berlin (DE)
(72) Erfinder: Krause, Gerhard, 29364 Wiedenrode (DE)
(74) Vertreter: Buss, Fritz Gerd

(57) **Zusammenfassung**

Die Erfindung betrifft einen Dachaufbau für ein Fahrzeug, vorzugsweise eine Sondersignalanlage für Kraftfahrzeuge. Sie besteht aus einem Dachaufbau für ein Fahrzeugdach (1), das aus wenigstens zwei Teilstrukturen besteht, die über dem Fahrzeugdach angeordnet sind. Beide Teilstrukturen sind auf einem Großteil ihrer Anströmfläche vom Fahrzeugdach (1) beabstandet angeordnet. Die in Fahrtrichtung des Fahrzeuges vorn liegende Teilstruktur ist als Strömungselement (4) ausgebildet. Das Strömungselement (4) teilt die anströmende Luft und führt diese teilweise über und teilweise unter die nachfolgende vom Strömungselement (4) beabstandete Teilstruktur, die vorzugsweise eine Sondersignalanlage (2) ist. Das Strömungselement (4) weist dabei eine dem Fahrzeugdach (1) zugewandte Kontur (4a) und eine gegenüberliegende, dem Fahrzeug abgewandte Kontur auf, die so ausgebildet sind, dass die geteilte Strömung in ihrem weiteren Verlauf von der Kontur unter die vom Fahrzeugdach (1) beabstandete nachfolgende Teilstruktur gezwungen wird und die dem Fahrzeug abgewandte Kontur so gestaltet ist, dass der nach oben abgelenkte Luftstrom über den höchsten Punkt der nachfolgenden Teilstruktur geführt wird.

## Beschreibung

Die Erfindung betrifft einen Dachaufbau für ein Fahrzeug, vorzugsweise eine Sondersignalanlage für Kraftfahrzeuge.
Dachaufbauten für Kraftfahrzeuge können zur Signalisation sowie zur Information von Verkehrsteilnehmern genutzt werden. Diese sind insbesondere für Sonderfahrzeuge z. B. Polizei- oder Feuerwehrfahrzeuge weit verbreitet. Aufgrund der Anforderungen an die Sichtbarkeit der erzeugten Signale ragen die Aufbauten weit über die normale Fahrzeughöhe hinaus. Des weiteren ist es nur bedingt möglich, die signalgebenden Strukturen flach und strömungsgünstig auszuführen, da Mindestabstrahlflächen für die Signale und eine Sichtbarkeit über dem Dach auch aus dem Blickwinkel eines ebenfalls sitzenden weiteren Verkehrsteilnehmers gefordert sind. Die Dachaufbauten bieten damit dem Fahrtwind eine erhebliche Angriffsfläche, was zu einer steifen Befestigungsstruktur der Aufbauten führt und gleichzeitig aber durch die im Fahrtwind stehenden Flächen und den schlechteren Luftwiderstandbeiwert erhebliche Einbußen in der erreichbaren Endgeschwindigkeit der Fahrzeuge mit sich bringt sowie durch die auftretenden höheren Verluste einen erhöhten Benzinverbrauch verursacht. Für Sondersignalanlagen, die bauartbedingt im vorderen bis mittleren Bereich des Fahrzeugs angeordnet sind, ergibt sich zusätzlich durch den an den Abrisskanten der Luftströmung auftretenden Unterdruck eine Entlastung der Hinterachse, was zu einer Verschlechterung der Fahreigenschaften führt.

Vorbekannt sind daher aus dem Stand der Technik eine Reihe von Lösungen, die versuchen diese Effekte zu vermindern.
Vorbekannt ist aus der DE 195 22 817 A1 eine Signalanlage für ein Fahrzeugdach, bei welcher die signalgebenden Strukturen in einem Abstand zum Fahrzeugdach angeordnet sind, wobei eine günstige Luftführung dadurch erzeugt werden soll, dass die anströmende Luft sowohl unter als auch über die Signalanlage geführt wird. Der Windangriff erfolgt hierbei jedoch direkt an der Signalanlage selbst, weshalb die Tragstrukturen steif ausgeführt werden müssen, da sie sowohl die Windkraft als auch das Eigengewicht der Anlage tragen müssen. Eine definierte Windströmung unter der Signalanlage ist des weiteren weitgehend vom Abstand zur Fahrzeugfront abhängig. Eine gute Durchströmung kann nur in Abstimmung auf einen speziellen Fahrzeugtyp und einen speziellen Auflagepunkt im Abstand zur Vorderkante erreicht werden. Eine vorgelagerte Windleiteinrichtung ist hier nicht vorhanden.

Weiterhin vorbekannt ist aus der DE 199 58 748 zur Vermeidung der Geräuschbildung an Fahrzeugdächern eine Windleiteinrichtung, welche in verschiedene Positionen verstellbar ist und in einer Position teilweise unter- bzw. überströmt wird. Die Windleiteinrichtung dient der Geräuschverminderung an Abrisskanten von Fahrzeugdächern. Eine Strömungsbeeinflussung für dahinterliegende Dachaufbauten wird nicht erreicht.

Vorbekannt ist aus der DE 38 01 894 A1 ein verschwenkbares Signalsystem zur Montage innerhalb eines Dachträgers. Das Signalsystem ist so gestaltet, dass es in seiner Ruhestellung innerhalb des Dachträgers liegt und in einer Betriebsstellung aus diesem heraus verschwenkt wird. Das Signalsystem ist mit einer Windleiteinrichtung nach vorn abgedeckt, welche in einem spitzen Winkel vom Träger ausgeht. Eine weitere Windleiteinrichtung ist der Signalanlage vorgelagert und am Trägersystem befestigt. Die Windleiteinrichtung weist jedoch keine die Luftführung in eine über die anschließende Signalanlage und eine darunter führende Anströmfläche auf. Ein Unterströmen der Leiteinrichtung und der Signalanlage ist nicht dargestellt. Eine Anordnung in Relation zur ansteigenden Fahrzeugfront, zur Aufteilung des Luftstromes ist ebenfalls nicht gezeigt.

Der Erfindung liegt die Aufgabe zugrunde, einen Dachaufbau für Fahrzeuge derart zu gestalten, dass er einen geringen Widerstand gegen die anströmende Luft und eine möglichst verwirbelungsfreie Umströmung des Dachaufbaus ermöglicht.
Diese Aufgabe wird bei gattungsgemäßen Dachaufsätzen erfindungsgemäß durch die kennzeichnenden Merkmale des Patentanspruchs 1 gelöst.

Erfindungsgemäß vorteilhaft besteht der Dachaufbau aus zwei Teilstrukturen, einer ersten Teilstruktur, die als Strömungselement ausgebildet ist und einer zweiten Teilstruktur, die vorzugsweise als signalgebender Aufbau einer Sondersignalanlage gestaltet ist. Das Strömungselement ist dabei in Fahrtrichtung gesehen der nachfolgenden Teilstruktur vorgelagert, wobei beide Teilstrukturen auf dem größten Teil ihrer in der Strömung befindlichen Fläche vom Fahrzeugdach beabstandet angeordnet sind.
In vorteilhafter Weise wird dadurch eine Strömung über sowie unter dem Strömungselement und der nachfolgenden Teilstruktur des Dachaufbaus, vorzugsweise der Sondersignalanlage ermöglicht, wobei die nachfolgende Teilstruktur weitgehend frei von Strömungskräften im "Windschatten" des Strömungselementes angeordnet ist.

Vorteilhaft ist weiterhin, dass die Strömungsführung die in der Signalanlage enthaltenen Bauteile weitgehend von dem mit hohem Winddruck in der Strömung mitgeführten Regenwasser, Staubpartikel etc. freihält. Die Signalanlage verschmutzt damit in geringerem Maße und an die Abdichtung der Signalanlage können geringere Anforderungen gestellt werden als für den Fall, dass diese frei in der Strömung belassen wird.

Das Strömungselement ist erfindungsgemäß vorteilhaft in einer Ebene angeordnet, die geringfügig über den von der Fahrzeugfront aufsteigenden Luftmassen liegt. Diese Ausführung ermöglicht die Teilung der anströmenden Luft in einen unter der nachfolgenden Teilstruktur des Dachaufbaus geführten Teil und einen über die nachfolgende Teilstruktur geführten Teil.

Erfindungsgemäß vorteilhaft weist das Strömungselement eine aerodynamisch gezielt gestaltete obere (dem Fahrzeug abgewandte) und untere (dem Fahrzeug zugewandte) Kontur auf. Die untere Kontur ist dabei so ausgeführt, dass sie den nach unten abgelenkten Strömungsteil so führt, dass dieser unter der beabstandet dahinter folgenden Teilstruktur des Dachaufbaus wirbelfrei hindurchgeführt wird. Es bildet sich ein virtueller Strömungskanal, der, ohne nach oben begrenzt zu sein, aufgrund der Gestaltung der Anströmfläche eine Führung der Luft unter die nachfolgende Teilstruktur ermöglicht. Die obere Kontur des Strömungselementes ist so gestaltet, dass die anströmende Luft ohne weitere Leiteinrichtungen über die Oberkante der nachfolgenden Teilstruktur geführt wird.

In einer vorteilhaften Weitergestaltung der Erfindung ist das Anströmelement so gestaltet, dass es auch bis zum maximalen Geschwindigkeitsbereich des Fahrzeuges ein Umströmen der nachfolgenden Teilstruktur des Dachaufbaus gewährleistet.

Erfindungsgemäß vorteilhaft ist das Strömungselement bezüglich seiner Anströmfläche kleiner als die nachfolgende Teilstruktur ausgebildet und dabei aerodynamisch optimiert ausgestattet. Da das Anströmelement keine signalgebenden Elemente enthalten muss, kann es flach auf dem Dach und mit geringer Fläche, aerodynamisch zur Strömungsführung optimiert ausgebildet werden. Es sind keine Anforderungen an Abstrahlfläche etc. zu stellen. Es kann damit gleichfalls flach auf dem Dach angeordnet werden, wodurch die an dem Strömungselement angreifenden Windkräfte nur eine geringe Hebelwirkung auf die Halterung erzeugen. In vorteilhafter Weise ist das Strömungselement einstückig, gleichzeitig als Halterungselement für die nachfolgende Teilstruktur ausgebildet. Es weist dafür balkenartige, sich in Längsrichtung des Fahrzeuges erstreckende und aerodynamisch optimierte Tragstrukturen auf.

Erfindungsgemäß vorteilhaft kann bei Fahrzeugen, die mit einer Dachreling ausgestattet sind, die Befestigung mit geeigneten Klemmelementen an der Dachreling erfolgen. Die Dachreling wird dabei durch die in Längsrichtung verlaufenden Tragstrukturen verdeckt, was eine Reduzierung von Windgeräuschen zur Folge hat. Gleichzeitig erfahren die Tragstrukturen eine Führung ohne zusätzliche Befestigungselemente.

Eine weitere Alternative der Befestigung ist die Verwendung von Haltegruppen in den Türausschnitten.

Ein weiterer Vorteil der Erfindung ist, dass die Signalanlage für verschiedene Fahrzeuge durch die Gestaltung des Strömungselementes anpassbar ist. Die Signalanlage kann dabei unverändert verwendet werden, wobei unterschiedlichen Anbringungsorten auf dem Fahrzeugdach und unterschiedlichen Anströmwinkeln z. B. durch die verschieden gestalteten Fahrzeugfronten damit Rechnung getragen werden kann, dass nur das Strömungselement angepasst wird. Eine weitere Anpassung könnte durch die Relativlage vom Strömungselement zur Signalanlage erfolgen. Es ist ebenso denkbar, dass bei gleicher Signalanlage und gleichem Anströmelement eine Anpassung an verschiedene Fahrzeuge nur durch Variation des Abstandes der Teile zueinander vorgenommen wird. Der erfindungsgemäße Dachaufbau ist damit sehr flexibel für verschiedene Fahrzeugtypen bei gleicher Signalanlage anpassbar.

In einer alternativen Ausgestaltung der Erfindung ist das Strömungselement und die Tragstruktur der Signalanlage einstückig gestaltet.

In einer weiteren alternativen Ausgestaltung ist der Abstand des Strömungselementes von der Signalanlage und/oder der Winkel des Strömungselementes einstellbar. Der Dachaufbau ist damit flexibel an verschiedene Fahrzeugtypen bzw. an verschiedene Geschwindigkeitsbereiche anpassbar.

Vorzugsweise wird die Signalanlage im Bereich der B-Säule angeordnet, wobei die seitlichen Tragstrukturen sich weitgehend in der Höhe der Dachreling erstrecken. Das Strömungselement wird in Abhängigkeit der Relativlage zur vorderen Abschlusskante des Fahrzeugdaches gestaltet. Die Winkellage der oberen Kontur des Strömungselementes richtet sich dabei nach der Winkellage der Frontscheibe und weist in einer bevorzugten Ausführung eine etwa gleiche Winkellage wie die der Frontscheibe auf. Eine Ausgestaltung der oberen Kontur des Strömungselementes bezüglich seiner Ausdehnung und Winkellage muss weiterhin entsprechend der nachfolgenden Signalanlage gestaltet werden.

Die Formgebung der unteren Kontur des Strömungselementes wird entsprechend dem Abstand der Sondersignalanlage zum Dach und deren Entfernung vom Strömungselement so gestaltet, dass der Anteil der anströmenden Luft, der vom Strömungselement entlang des Fahrzeugdaches geführt wird, weitgehend vollständig unter der Signalanlage hindurchgeführt wird.

Um den gesamten Anteil der anströmenden Luft, welcher vom Strömungselement entlang des Fahrzeugdaches geführt wird unter der Signalanlage hindurchzuführen, ist eine ebenfalls vom Fahrzeugdach beabstandet angeordnete flächige Abdeckung zwischen dem Strömungselement und den Tragstrukturen der Signalanlage vorgesehen. Auf diese Weise wird aus dem Strömungselement, den Tragstrukturen der Signalanlage, dem Fahrzeugdach und der flächige Abdeckung ein realer Strömungskanal gebildet. Das Strömungselement, die Tragstrukturen der Signalanlage und die flächige Abdeckung bilden eine bauliche Einheit. Bevorzugt deckt die flächige Abdeckung den gesamten Strömungskanal ab, wobei auch eine teilweise Abdeckung an strömungsrelevanten Punkten möglich ist.

Hierbei zeigen:
Figur 1 eine perspektivische Ansicht des Dachaufbaus von vorn,
Figur 2 eine Schnittdarstellung des Dachaufbaus von der Seite,
Figur 3 eine schematisierte Detaildarstellung des Dachaufbaus von der Seite,
Figur 4 eine perspektivische Ansicht des Dachaufbaus von vom mit Abdeckung,
Figur 5 eine Ansicht des Dachaufbaus von der Seite mit Abdeckung.

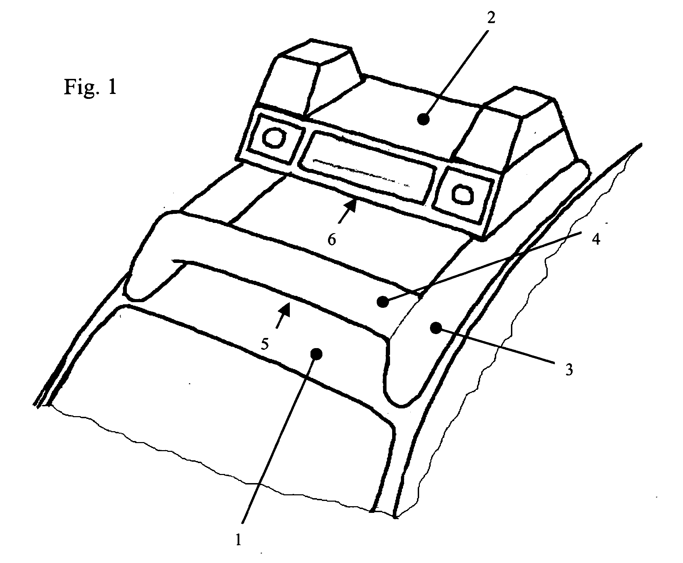

In Fig. 1 ist der Dachaufbau perspektivisch auf einem teilweise dargestellten Fahrzeugdach 1 gezeigt. Der Dachaufbau besteht dabei aus einer Signalanlage 2 und einem Strömungselement 4, das in Fahrtrichtung gesehen vor der Signalanlage 2 angeordnet ist. Beide Elemente des Dachaufbaus sind fest auf dem Fahrzeugdach 1 angeordnet. In der beispielhaft dargestellten Ausführung weist das Strömungselement 4 sich in Längsrichtung des Fahrzeuges zum Fahrzeugheck erstreckende Tragstrukturen 3 auf, auf welchen die Signalanlage 2 fest angeordnet ist. Die Signalanlage 2 und das Strömungselement 4 sind dabei über einen wesentlichen Teil der Anströmfläche vom Fahrzeugdach 1 beabstandet angeordnet, so dass bei Bewegung in Fahrtrichtung vorwärts eine Führung der anströmenden Luft zwischen dem Fahrzeugdach 1 und der Signalanlage 2 sowie zwischen Fahrzeugdach 1 und Strömungselement 4 stattfindet.

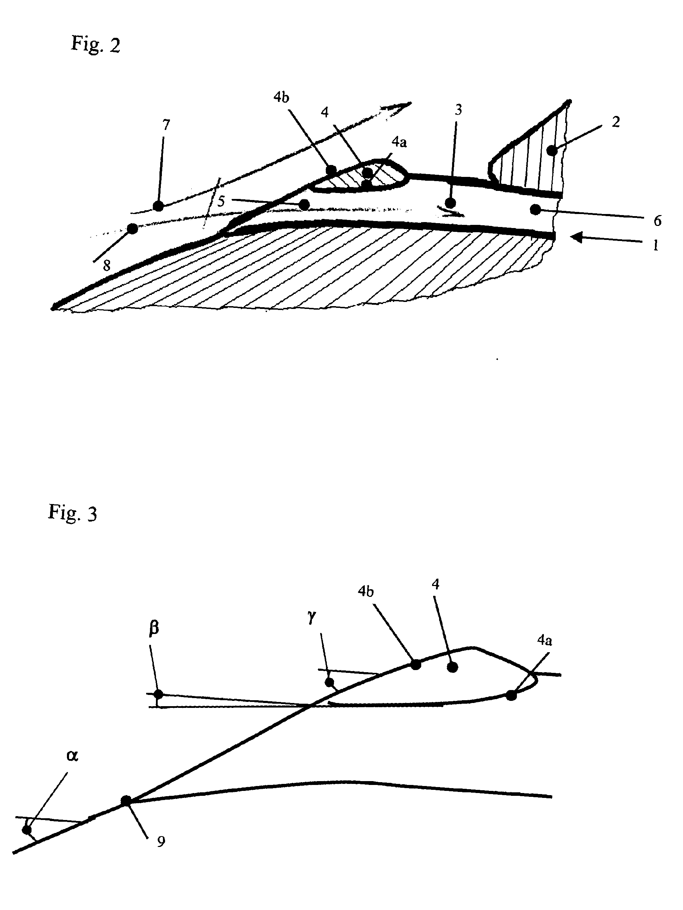

In Fig. 2 ist der Dachaufbau in einer Schnittdarstellung von der Seite gezeigt. Die Pfeile 8 und 7 bezeichnen dabei die Luftströmung, die an der Fahrzeugvorderkante geteilt wird und teilweise unter und über dem Strömungselement 4 und der Signalanlage 2 verläuft. Die Signalanlage 2 und das Strömungselement 4 sind über weite Teile der Anströmfläche vom Fahrzeugdach 1 beabstandet angeordnet. Es bilden sich dadurch von der Luftströmung 7, 8 durchströmbare Hohlräume 5 und 6 zwischen Fahrzeugdach 1 und Dachaufbau. In der Seitenansicht ist weiterhin eine der Tragstrukturen 3 zu erkennen, die in einer beispielhaften Ausgestaltung hier einstückig mit dem Strömungselement 4 ausgebildet ist.

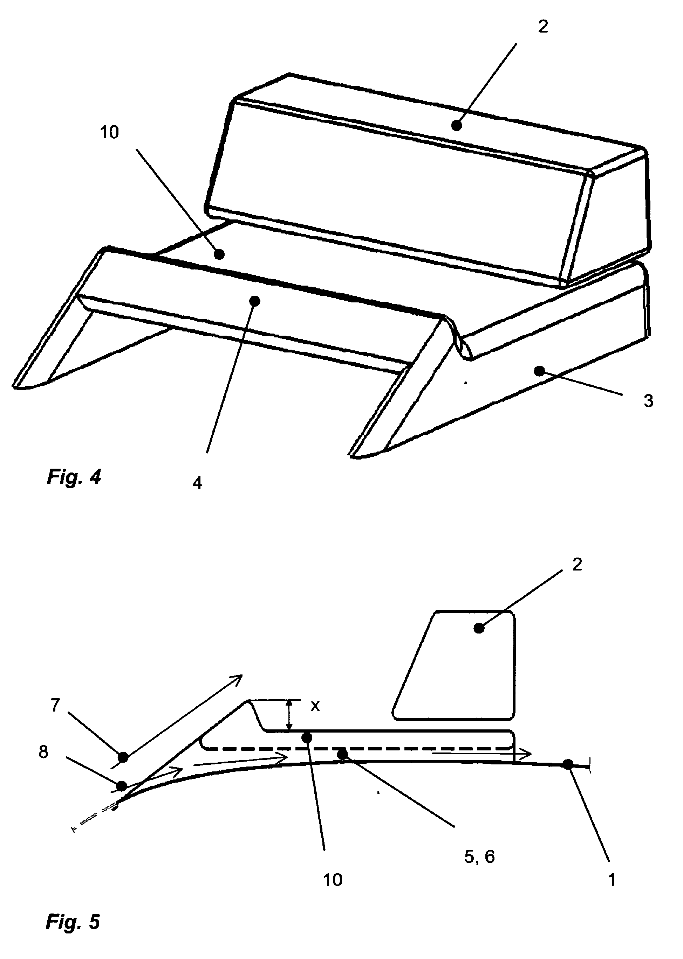

In Figur 3 ist in einer schematisierten Detaildarstellung eines Ausschnittes von Fig. 2 der Dachaufbau von der Seite dargestellt. In Figur 3 sind die Außenkonturlinien stilisiert, um die Winkelrelationen des Strömungselements bzw. der vorderen, weitgehend durch die Frontscheibe definierten Kontur des Fahrzeuges in Bezug zu den im wesentlichen horizontal anströmenden Luftmassen darzustellen. Die Winkel werden dabei in positiver Richtung ausgehend von einer waagerechten Horizontlinie nach oben definiert. Der Winkel α ist dabei der Winkel, den die vordere Kontur des Fahrzeuges, im wesentlichen die Frontscheibe, zur Horizontlinie einnimmt. Winkel γ ist der Winkel, den die obere Kontur 4a des Strömungselementes 4 zur Horizontlinie einnimmt. In einer bevorzugten Ausgestaltung der Erfindung sind die Winkel α und γ nahezu gleich. Es ergibt sich dadurch eine Fortführung der von der Windschutzscheibe nach oben abgelenkten Luft, welche im weiteren, ohne durch die Umlenkung der Luft Turbulenzen zu erzeugen, weiter entlang der oberen Kontur 4b des Strömungselementes 4 und nachfolgend über die Signalanlage 1 geführt wird. Das Strömungselement 4 ist dabei in seiner Lage auf dem Fahrzeugdach so angeordnet, dass ein Teil der anströmenden Luft unter diesem hindurchgeführt wird. Die Luftführung erfolgt dabei entlang der unteren Kontur 4a des Strömungselementes 4. Die untere Kontur 4a weist dabei bevorzugt einen Winkel β zur Horizontlinie auf, der kleiner als der Winkel γ der oberen Kontur 4b mit der Horizontlinie ist. Die Gestaltung der unteren Kontur 4a zwingt dabei die anströmende Luft in einen Korridor zwischen Strömungselement 4 und Fahrzeugdach 1, wodurch sie im weiteren Verlauf unter der Signalanlage 1 hindurchgeführt wird. Die Gestaltung der unteren Kontur erzeugt damit eine strömungsgünstige und verwirbelungsfreie Führung der Luft entlang des Fahrzeugdaches 1. In einer alternativen Ausgestaltung kann der Winkel β nahe 0 sein oder Werte annehmen, die geringfügig kleiner als 0 sind, so dass sich im Verlauf des Strömungselementes 4 in Strömungsrichtung der Luft eine Verminderung des Abstandes des Strömungselementes 4 zu Fahrzeugdach 1 ergibt.

Wie in Figur 4 und 5 gezeigt, wird zwischen dem Strömungselement 4, den Tragstrukturen 3 der Signalanlage 2, dem Fahrzeugdach 1 und der flächigen, vom Fahrzeugdach 1 beabstandeten Abdeckung 10 ein Strömungskanal gebildet. Die durchströmbaren Hohlräume 5 und 6 sind zu diesem einen Strömungskanal zusammengefasst. Die Luftströmung, die unter dem Strömungselement 4 entsprechend dem Pfeil 8 verläuft durchströmt diesen Strömungskanal. Das Strömungselement 4, die Tragstrukturen 3 der Signalanlage 2 und die flächige Abdeckung 10 bilden, wie in Figur 5 gezeigt, eine bauliche Einheit. Bevorzugt ist die Stärke der flächigen, vom Fahrzeugdach 1 beabstandeten Abdeckung 10 so zu wählen, dass ein Mindestabstand x zur Ausformung einer strömungsgünstigen Abrisskante vorhanden ist.

### Bezugszeichenliste

- 1: Fahrzeugdach
- 2: Signalanlage
- 3: Tragstruktur
- 4: Strömungselement
- 4a: untere Kontur des Strömungselementes (dem Fahrzeugdach zugewandt)
- 4b: obere Kontur des Strömungselementes (dem Fahrzeug abgewandt)
- 5: Hohlraum zwischen Fahrzeugdach und Strömungselement
- 6: Hohlraum zwischen Signalanlage und Fahrzeugdach
- 7: Luftströmung
- 8: Luftströmung
- 9: Dachkante (vorn)
- 10: Abdeckung
- α: Winkel zwischen Frontscheibe und Horizontlinie
- β: Winkel zwischen unterer Kontur 4a des Strömungselementes 4 und der Horizontlinie
- γ: Winkel zwischen oberen Kontur 4b des Strömungselementes 4 und der Horizontlinie
- x: Mindestabstand

## Patentansprüche

1. Dachaufbau für ein Fahrzeugdach (1), der aus wenigstens zwei über dem Fahrzeugdach (1) angeordneten Teilstrukturen besteht,
**dadurch gekennzeichnet,**
**dass** beide Teilstrukturen auf einem Großteil ihrer Anströmfläche vom Fahrzeugdach (1) beabstandet angeordnet sind, wobei die in Fahrtrichtung des Fahrzeuges vorn liegende Teilstruktur als Strömungselement (4) ausgebildet ist, das so gestaltet ist, dass eine Strömungsteilung der anströmenden Luft teilweise über und teilweise unter die nachfolgende vom Strömungselement (4) beabstandete Teilstruktur erfolgt.

2. Dachaufbau nach Anspruch 1,
**dadurch gekennzeichnet,**
**dass** das Strömungselement (4) eine dem Fahrzeugdach (1) zugewandte Kontur (4a) und eine gegenüberliegende dem Fahrzeug abgewandte Kontur (4b) aufweist, die so ausgebildet sind, dass die geteilte Strömung in ihrem weiteren Verlauf von der Kontur (4a) unter die vom Fahrzeugdach (1) beabstandete nachfolgende Teilstruktur gezwungen wird und die dem Fahrzeug abgewandte Kontur (4b) so gestaltet ist, dass der nach oben abgelenkte Luftstrom über den höchsten Punkt der nachfolgenden Teilstruktur geführt wird.

3. Dachaufbau nach einem der vorherigen Ansprüche,
**dadurch gekennzeichnet,**
**dass** die in Fahrtrichtung gesehen hintere Teilstruktur als Signalanlage (2) ausgebildet ist.

4. Dachaufbau nach Anspruch 1 - 3,
**dadurch gekennzeichnet,**
**dass** das Strömungselement (4) eine kleinere Anströmfläche als die nachfolgende Teilstruktur aufweist.

5. Dachaufbau nach einem der vorherigen Ansprüche,
**dadurch gekennzeichnet,**
**dass** das Strömungselement (4) hinter der vorderen Dachkante des Fahrzeuges zur Teilung der anströmenden Luftmassen in einer Ebene geringfügig über der Strömungsfortführung der von der Fahrzeugfront abgeleiteten Luftmassen angeordnet ist.

6. Dachaufbau nach einem der vorherigen Ansprüche,
**dadurch gekennzeichnet,**
**dass** das Strömungselement (4) sich längst des Fahrzeuges erstreckende Tragstrukturen (3) für die nachfolgende Teilstruktur des Dachaufbaus aufweist.

7. Dachaufbau nach einem der vorherigen Ansprüche,
**dadurch gekennzeichnet,**
**dass** das Strömungselement (4) und die Tragstrukturen (3) für die nachfolgende Teilstruktur des Dachaufbaus einstückig ausgeführt sind.

8. Dachaufbau nach einem der vorherigen Ansprüche,
**dadurch gekennzeichnet,**
**dass** das Strömungselement (4) und die in Strömungsrichtung nachfolgende Teilstruktur einstückig ausgeführt sind.

9. Dachaufbau nach einem der vorherigen Ansprüche,
**dadurch gekennzeichnet,**
**dass** eine vom Fahrzeugdach 1 beabstandete flächige Abdeckung 10 zwischen dem Strömungselement 4 und den Tragstrukturen 3 der Signalanlage 2 angeordnet ist.

10. Dachaufbau nach einem der vorherigen Ansprüche,
**dadurch gekennzeichnet,**
**dass** das Strömungselement 4, die Tragstrukturen 3 der Signalanlage 2 und die flächige Abdeckung 10 eine bauliche Einheit bilden.

11. Dachaufbau nach einem der vorherigen Ansprüche,
**dadurch gekennzeichnet,**
**dass** die Stärke der flächigen, vom Fahrzeugdach 1 beabstandeten Abdeckung 10 derart gewählt ist, dass ein Mindestabstand x zur Ausformung einer strömungsgünstigen Abrisskante vorhanden ist.

12. Dachaufbau nach einem der vorherigen Ansprüche,
**dadurch gekennzeichnet,**
**dass** das Strömungselement (4) in seinem Winkel einstellbar ist.

13. Dachaufbau nach einem der Ansprüche 1-7 o. 9-12,
**dadurch gekennzeichnet,**
**dass** das Strömungselement (4) und die nachfolgende Teilstruktur des Dachaufbaus in ihrem Abstand zueinander einstellbar sind.

14. Dachaufbau nach einem der Ansprüche 6 o. 7,
**dadurch gekennzeichnet,**
**dass** die Tragstrukturen (3) auf einer auf dem Fahrzeugdach (2) befestigten Dachreling angeordnet sind und diese im Bereich der Längsterstreckung der Tragstrukturen (3) weitgehend umschließen.

15. Dachaufbau nach einem der Ansprüche 6 o. 7,
**dadurch gekennzeichnet,**
**dass** die Tragstrukturen (3) mit in den Türausschnitten angeordneten Haltegruppen am Fahrzeug befestigt werden.

16. Dachaufbau nach einem der vorherigen Ansprüche,
**dadurch gekennzeichnet,**
**dass** das Strömungselement (4) in Strömungsrichtung hinter der vorderen Dachkante (9) naheliegend zu dieser angeordnet ist und das die obere Kontur (4b) des Strömungselementes (4) einen Winkel (γ) gegen die Horizontlinie aufweist, der nahezu gleich dem Winkel (α) ist, den die vordere Fahrzeugkontur mit der Horizontlinie bildet.

17. Dachaufbau nach einem der vorherigen Ansprüche,
**dadurch gekennzeichnet,**
**dass** das Strömungselement (4) in Strömungsrichtung hinter der vorderen Dachkante (9) naheliegend zu dieser angeordnet ist und dessen untere Kontur (4a) einen kleineren Winkel (β) gegen die Horizontlinie aufweist, als der Winkel (γ) den die oberen Kontur mit der Horizontlinie bildet.
